**Europäisches Patentamt**

**European Patent Office**

**Office européen des brevets**

(19)

(11) Publication number : **0 417 185 B1**

## (12) EUROPEAN PATENT SPECIFICATION

(45) Date of publication of patent specification :
09.09.92 Bulletin 92/37

(51) Int. Cl.$^5$ : **C02F 3/30, C02F 1/52**

(21) Application number : **89906861.3**

(22) Date of filing : **31.05.89**

(86) International application number :
**PCT/SE89/00305**

(87) International publication number :
**WO 89/12029 14.12.89 Gazette 89/29**

(54) **A PROCESS FOR REMOVING NITROGEN COMPOUNDS FROM RAW WATER.**

(30) Priority : **03.06.88 SE 8802074**

(43) Date of publication of application :
**20.03.91 Bulletin 91/12**

(45) Publication of the grant of the patent :
**09.09.92 Bulletin 92/37**

(84) Designated Contracting States :
**AT BE CH DE FR GB IT LI NL**

(56) References cited :
**DE-C- 2 616 273**

(56) References cited :
**Chemical Abstract, Vol.98 (1983),abstract No 98:203810k, Vodni Hospod.,B 1983, 33(3), 77-81,VSCHT, Prague, Czech.**
**Chemical Abstract, Vol.91 /1979), abstract No.91: 26832b, Jpn. Kokai Tokkyo Koho JP 70 30,661, Ebara-Infilco Co., Ltd.**

(73) Proprietor : **ECOCURE AB**
**Skolvägen 11A**
**S-135 55 Tyresö (SE)**

(72) Inventor : **HALLBERG, Rolf, Oskar**
**Skolvägen 11A**
**S-135 55 Tyresö (SE)**

(74) Representative : **Delmar, John-Ake**
**P.O. Box 26 133**
**S-100 41 Stockholm (SE)**

## Description

The present invention relates to a process for removing, by means of microorganisms and chemicals, nitrogen compounds dissolved in raw water, that is untreated water from a ground water or surface water supply.

Nitrogen exists in nature in inorganic as well as organic form and is converted in a cycle by means of microbes and chemical redox processes. The organic nitrogen exists in solid and dissolved form as well as in gas phase while the inorganic nitrogen almost exclusively exists in dissolved form or in gas phase.

Nitrite is the form of nitrogen in raw crater, e g surface water or ground water, that is of most interest from a toxic point of view. The reason therefor is that nitrite blocks the respiratory mechanism in humans and an excessively great intake leads to choking symptoms which are particularly critical for infants (blue babies). Also nitrate may give the same problem since nitrate easily may be converted into nitrite by means of microbes or purely chemical reactions in the human intestinal tract. Thus, nitrate and nitrite should be removed from drinking water before this is supplied to the consumer.

Among the types of purification processes nowadays used for removing nitrogen compounds the following may be mentioned.
(1) ion exchange;
(2) reversed osmosis;
(3) biological denitrification.

The first two of said processes in most cases lead to high investment and operating costs and are therefore less attractive than the biological method. Moreover, ion exchange must not be used in all countries since toxic components are released from the ion exchange resin. According to the biological process nitrite and nitrate are converted into nitrogen by means of microbes, and the nitrogen is then removed by e g aeration.

The biological denitrification takes place by means of heterotrophic, facultatively anaerobic bacteria. The term "heterotrophic" means that the bacteria need an organic carbon source as an electron donor and for the synthesis of their own carbon compounds. The carbon source, which may consist of low molecular weight sugars, simple alcohols or organic acids, is converted into carbon dioxide by oxidation. The term "facultatively anaerobic" means that the bacteria utilize molecular oxygen as an electron acceptor if oxygen is available. In the absence of oxygen the bacteria on the other hand utilize nitrate or nitrite as an electron acceptor. Thus, a predominant denitrification process requires that the reaction take place in an almost oxygen free environment. Not all nitrogen will be converted into molecular nitrogen but a portion thereof is used for the preparation of organic nitrogen compounds necessary for the bacteria.

The bacteria also need phosphate and trace elements for their growth and propagation. Trace elements are normally present in sufficient amounts in the types of water to be purified while phosphate has to be added in certain cases.

The bacteria active in the denitrification process usually belong to the genera Pseudomonas, Bacillus and Achromobacter. Normally the biological denitrification process results in an almost complete removal of nitrate and nitrite. The disadvantage is that said two components are not converted completely into molecular nitrogen and therefore cannot be removed completely from the system. In addition to the formation of organic nitrogen compounds it has been shown that a bacterial dissimilatory denitrification takes place leading to the formation of ammonium (see Smith, De Laune and Patrick, Soil Sci Soc Am J, Vol 46, 1982, p 748-750). Ammonium may be formed assimilatorily, i e ammonium is absorbed in the cell mass of the bacteria, as well as dissimilatorily, i e ammonium is emitted to the surrounding solution during the metabolism of the bacteria. The organically bound nitrogen will also gradually be emitted to the surrounding solution, normally in the form of ammonium, when the bacterium dies and the cell thereof lyses.

In case of drinking water ammonium may be oxidized to nitrite and nitrate before the water has reached the consumer. Thus, the biological denitrification process has not given the desired result if the ammonium contents are too high.

The object of the present invention is to supplement the biological denitrification process with a process step removing ammonium. By this means all nitrogen components are removed so that they cannot give rise to toxic problems in drinking water.

In order to remove ammonium ions these have to be converted into a solid phase which is stable enough to be removed from the solution by e g filtration or sedimentation. An example of such a solid phase is the mineral struvite ($MgNH_4PO_4 \cdot 6H_2O$).

Thus, the invention relates to a process for removing nitrogen compounds from raw water, in which process the water is first subjected to a denitrification step. This process is characterized in that the water coming from the denitrification step is aerated in an aeration step for lysing the denitrification bacteria so that the cell-bound nitrogen is released in the form of ammonium ions, and that the water then in a precipitation step is treated with magnesium ions and phosphate ions for precipitating ammonium ions in the form of struvite.

The amounts of magnesium and phosphate ions which must be added for the formation of struvite are comparatively small since this mineral has a low solubility product. The formation of struvite takes place also by means of bacteria (see Rivadeneyra et al, Geomicrobiol J, Vol 3, No 2, 1983, p 151-163), so it may be assumed that in a natural medium the process takes place quicker and at lower contents of the components present as compared to a purely chemical struvite formation. Bacteria shown to have a preference for the formation of extracellular struvite belong to the genera Bacillus, Arthrobacter, Pseudomonas and Azotobacter.

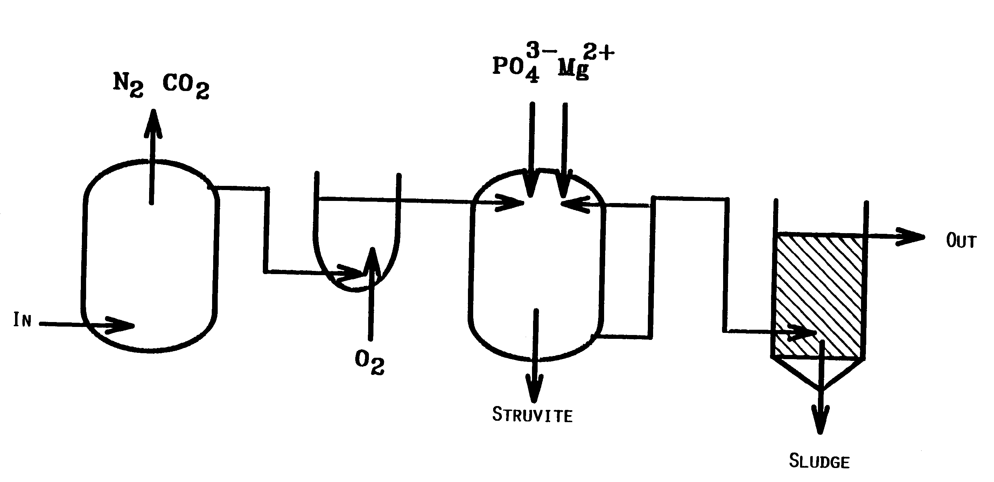

Carrying out the purification process proposed requires at least two reactors, one aeration vessel and usually a filtration or sedimentation tank (see the drawing).

The denitrification takes place in the first reactor. The molecular nitrogen gas formed is removed from the top of the reactor, either by natural pressure via a water seal or by depression by means of a vacuum pump. If a filling material is used, which is not necessary, this material may consist of sand, leca pellets, plastic beads or the like. The most essential function of the filling material is to create surfaces to which the bacteria can adhere and upon which they can grow. The water to be treated is forced to flow in vertical direction from the bottom upwards. In order to attain optimal conditions for the biological reaction the water added is adjusted with regard to its content of carbon source for the bacteria. Suitably alcohol, sugar or organic acid is added. The amount of phosphate in the raw water is normally sufficient but should be supervised considering the bacterial activity aimed at in the reactor. The pH value is adjusted to a value between 6 and 8, suitably with NaOH.

The next step is an aeration step. The aeration may be performed in a conventional manner in an open vessel by injecting air in the bottom of the vessel. The bacteria from the anaerobic denitrification process are subjected to a shock during the aeration leading to the lysis of the bacteria. The organic nitrogen components will then be released resulting in increased ammonium contents. The aeration must not be too vigorous because then the ammonium will be reconverted into nitrite and nitrate. This is balanced by the amount of air added per unit of time and by the size of the vessel regulating the dwell time of the water. The water should be fed to the bottom of the vessel.

The formation of struvite takes place in the second reactor. The direction of the flow in this reactor is opposite to that in the first reactor. In order to attain an effective precipitation of ammonium in the form of struvite phosphate and magnesium must be added in suitable proportions. The feed of these chemicals is based on chemical equilibrium calculations. Phosphate, magnesium and nutrient solutions are fed from separate vessels to the top of the reactor. Magnesium may be added in the form of e g $MgCl_2$, $MgSO_4$ or $MgCO_3$, and phosphate may be added in the form of e g $K_2HPO_4$ or $KH_2PO_4$. The filling material may be of the same kind as that used in the first reactor but a portion of the filling material may also consist of a suitable magnesium mineral such as magnesite or dolomite. In this way the amount of magnesium solution to be added may be reduced substantially. The water level in this reactor may be controlled by regulating the outflow level by means of e g a hose. A portion of the outflow is recirculated to the top of the reactor so that viable bacteria in the outflow will be added to and distributed uniformly in the inflow.

In the filtration or sedimentation tank the flow of water is from below upwards. However, in case of sedimentation the water shall not be introduced in the bottom of the tank but at a suitable distance from the bottom so that the particles sedimented will not be resuspended. A sedimentation tank may be provided with lamellae for achieving lamella sedimentation. A filtration tank may contain sand as filtering material. Such a sedimentation or filtration of the water is normally necessary before the water is conveyed to the consumer.

Prior biological processes for removing nitrogen compounds from raw water have not been found to be reliable because far too great a portion of the nitrogen has remained in the water, inter alia in the form of ammonium compounds. This problem is eliminated by means of the present invention. An optimal precipitation of ammonium in the form of struvite is possible by the special operation of the second reactor with reversed flow and recirculation. The aeration in the second step has been found to effectively kill and spread the bacteria from the first reactor.

Laboratory tests performed with water containing 30-40 mg $NO_3^-$ per litre have resulted in a minimum amount of dissolved nitrogen compounds in the outflow, viz <1 mg N per litre of water. The system works better and is more stable at high concentrations of $NO_3^-$ as compared to low concentrations.

## Claims

1. A process for removing nitrogen compounds from raw water, in which process the water is first subjected to a denitrification step, characterized in that the water coming from the denitrification step is aerated in an aeration step for lysing the denitrification bacteria so that the cell-bound nitrogen is released in the form of ammonium ions, the aeration not being so vigorous that the ammonium ions are converted into nitrite and nitrate ions, and that the water then in a precipitation step is treated with magnesium ions and phosphate ions for precipitating ammonium ions in the form of struvite.

2. A process according to claim 1, characterized in that the precipitation step is carried out in a reactor wherein the water is brought to flow from the top downwards, and that the magnesium and phosphate ions are fed to the top of said reactor.

3. A process according to claim 2, characterized in that a portion of the outflow from the precipitation reactor is recirculated to the top of said reactor.

4. A process according to any of the claims 1 - 3, characterized in that the precipitated struvite is removed from the water by sedimentation and/or filtration.

**Patentansprüche**

1. Verfahren zur Entfernung von Stickstoffverbindungen aus Rohwasser, bei dem zuerst das Wasser einer Denitrifizierungsstufe unterzogen wird, dadurch gekennzeichnet, daß das der Denitrifizierungsstufe entstammende Wasser in einer Belüftungsstufe belüftet wird, um die Denitrifizierungsbakterien zu lysieren, derart, daß der zellengebundene Stickstoff in Form von Ammoniumionen freigesetzt wird, wobei die Belüftung nicht so heftig ist, daß die Ammoniumionen in Nitrit- und Nitrationen übergeführt werden, und daß das Wasser hiernach in einer Ausfällungsstufe mit Magnesiumionen und Phosphationen behandelt wird, um Ammoniumionen in Form von Struvit auszufällen.

2. Verfahren gemäß Anspruch 1, dadurch gekennzeichnet, daß die Ausfällungsstufe in einem Reaktor durchgeführt wird, in dem man das Wasser vom oberen Ende nach unten strömen läßt, und daß die Magnesium- und Phosphationen dem oberen Ende des Reaktors zugeführt werden.

3. Verfahren gemäß Anspruch 2, dadurch gekennzeichnet, daß ein teil des Ausstroms aus dem Ausfällungsreaktor zu dem oberen Ende des Reaktors rezirkuliert wird.

4. Verfahren gemäß einem der Ansprüche 1 bis 3, dadurch gekennzeichnet, daß der ausgefällte Struvit aus dem Wasser durch Sedimentation und/oder Filtration entfernt wird.

**Revendications**

1. Un procédé pour éliminer les composés azotés de l'eau brute, procédé dans lequel l'eau est d'abord soumise à une étape de dénitrification, caractérisé en ce que l'eau provenant de l'étape de dénitrification est aérée dans une étape d'aération pour lyser les bactéries dénitrifiantes, de sorte que l'azote lié aux cellules est libéré sous la forme d'ions ammonium, l'aération n'étant pas assez vigoureuse pour transformer les ions ammonium en ions nitrite et nitrate, et en ce que l'eau est ensuite traitée dans une étape de précipitation par des ions magnésium et des ions phosphate pour précipiter les ions ammonium sous la forme de struvite.

2. Un procédé selon la revendication 1, caractérisé en ce que l'étape de précipitation est mise en oeuvre dans un réacteur dans lequel l'eau circule depuis le sommet vers le bas et en ce que les ions magnésium et les ions phosphates sont introduits au sommet dudit réacteur.

3. Un procédé selon la revendication 2, caractérisé en ce qu'une portion du courant de sortie du réacteur de précipitation est recyclée au sommet dudit réacteur.

4. Un procédé selon l'une quelconque des revendications 1 à 3, caractérisé en ce que la struvite précipitée est éliminée de l'eau par sédimentation et/ou filtration.